Europäisches Patentamt

European Patent Office

Office européen des brevets

(11) Publication number: 0 387 230
A1

# EUROPEAN PATENT APPLICATION

(21) Application number: 90870033.9

(22) Date of filing: 06.03.90

(51) Int. Cl.⁵: **B29C 67/22, B29C 51/14,**
**//B29L31:58**

(30) Priority: 10.03.89 BE 8900264

(43) Date of publication of application:
**12.09.90 Bulletin 90/37**

(84) Designated Contracting States:
**AT BE CH DE DK ES FR GB GR IT LI LU NL SE**

(71) Applicant: **RECTICEL, N.V.**
**De Broquevillelaan 12**
**B-1150 Sint-Pieters-Woluwe(BE)**

(72) Inventor: **Jourquin, Lucien**
**Cooppallaan 156/1**
**B-9200 Wetteren(BE)**
Inventor: **Debaes, Bernard**
**De Streep 4**
**B-8340 Sijsele(BE)**

(74) Representative: **Debrabandere, René**
**BUREAU DE RYCKER Vereenigde**
**Octrooibureaux Belgie N.V. Arenbergstraat**
**13**
**B-2000 Antwerpen(BE)**

(54) **Procedure for manufacturing an armchair cushion and thus manufactured armchair cushion.**

(57) In order to manufacture an armchair cushion with greater sitting comfort, a covering (5) of textile covered with a layer of supple foam plastic (6) is brought over a vacuum drawing mold part (1). Superheated steam is applied in this mold part (1) in order to relax this covering (5). Subsequently an airtight foil (7) is installed on the covering and through creating a vacuum in the mold part (1), the covering (5), the layer (6) and the foil (2) are sucked against the bottom. The components for the formation of the nucleus (8) are installed and the mold (1, 2) is closed. After hardening of the nucleus (8) superheated steam is blown through the covering (5) in order to melt the foil (7).

Fig.1

**Procedure for manufacturing an armchair cushion and thus manufactured armchair cushion.**

The invention relates to a procedure for manufacturing an armchair cushion with an in situ foamed nucleus of foam plastic and a covering, according to which procedure a covering of textile and an airtight meltable foil is brought over a vacuum drawing mold part of a mold with the covering of textile on the side of the mold part, the covering and the foil at least through the creation of a vacuum between this mold part and the airtight foil, are sucked against the bottom of the mold part, in the mold the liquid components are applied for molding the nucleus of the foam plastic and the cushion is removed from the mold after the hardening of the foam plastic.

The term "textile" is used here in a wide sense so that hereunder both fabrics and knits must be understood.

"Seat cushion" must also be understood in a wide sense here so that hereunder both a cushion which forms the seat of an armchair or chair and a cushion that forms a backrest thereof or even a cushion that forms a complete armchair, must be understood.

Procedures of this type are often utilized for the manufacture of parts or complete seats for cars.

Procedures of this type are among others known from DE-C-35 06 230 and DE-C-35 06 232.

With these known procedures an airtight foil must also necessarily be applied against the covering of textile, on the one hand in order to protect the textile against the chemicals which are applied for forming the foam plastic and, on the other hand, in order with the assistance of vacuum to suck the covering against the often complex contours of the bottom of the mold part.

The impermeable character of the airtight foil that is essential during manufacturing, however gives rise to inadequate comfort in use after the formation. Definite problems arise with perspiration.

The invention has the purpose of remedying this disadvantage and to provide a procedure for manufacturing an armchair cushion of the aforementioned type whereby an armchair cushion with improved sitting comfort is obtained.

For this purpose, after the hardening of the foam plastic, the airtight meltable foil is at least partly melted by blowing hot gaseous fluid at sufficiently high temperature through the covering of textile.

Of course the temperature of the fluid must be sufficiently high so that the meltable foil would melt but still sufficiently low so that the textile would not be damaged. Normally this is not a problem because a short heating time can suffice in order to melt the foil.

The melting away of a plastic foil of a covering of a nucleus of foam plastic for an armchair cushion in itself is known from US-A-4 692 199. According to this patent the armchair cushion is nevertheless manufactured in a manner which is not of the type intended here. In particular the nucleus of foam plastic is not formed on the covering on the spot. The patent principally relates to the sticking of the covering onto a pre-manufactured nucleus of foam plastic. The plastic foil is then also not a protective foil which during the manufacture of the cushion must protect the textile against the chemicals which serve for the foam plastic formation but on the contrary is an adhesive that only serves as a necessity for sticking the textile to the pre-manufactured nucleus of foam plastic.

In a particular embodiment of the invention the airtight meltable foil is at least partly melted by blowing steam through the covering of textile

Especially with this embodiment a short heating time of the foil is sufficient in order to melt it, in contrast to other heating techniques such as heating by conduction.

In another particular embodiment of the invention a non or little elastic at room temperature but relaxable by heating textile is utilized and, before sucking in the covering against the bottom of the mold part, this covering of textile is relaxed with assistance of hot gaseous fluid.

Under relaxable by heating textile is here intended, a textile that becomes more transformable under the influence of heat. Of course techniques also exist in order to be able to transform textiles such as the use of yarns with special structure, the use of intrinsic elastic filaments or the utilization of knitting techniques. In these cases the relaxing through heating is of no or less use.

With this embodiment there is an increased freedom of design of shape of the cushion. Many of the utilized textile types are difficult to transform. Especially with difficult shapes or large transformations, it is necessary to pre-shape the covering of textile by pre-manufacture.

Not only is this pre-manufacture time-consuming and expensive but an additional problem is created of difficult penetration through the seams by chemicals which are utilized for the formation of the foam plastic.

In order to prevent penetration, sealing tapes must then be glued on, which is however no satisfactory solution. With coverings of textile which are formed by pre-manufacture, a relatively important waste percentage can be found through penetration of the chemicals.

By the utilization of relaxable textile and the relaxation, the necessity for pre-manufacture is largely avoided, although it obviously also remains difficult to relax pre-manufactured coverings by heating.

Suitably the covering of textile is relaxed before the airtight foil is applied on it.

Preferably the textile is relaxed by means of superheated steam.

The invention also relates to an armchair cushion manufactured according to the procedure according to one of the aforementioned embodiments.

Other details and advantages of the invention will appear from the following description of a procedure for manufacturing an armchair cushion and thus manufactured armchair cushion, according to the invention; this description is only given as an example and does not limit the invention; the reference numbers relate to the drawings attached hereto.

Figure 1 represents a schematically held cross-section of a device for manufacturing an armchair cushion during the application of the procedure according to the invention.

Figure 2 represents a section drawn on larger scale of a part of the covering utilized with the application of the procedure.

In the two figures the same reference numbers relate to the same elements.

For manufacturing an armchair cushion, for forming for example the seat or the backrest of an armchair or the complete armchair, use is made in the known manner of a mold consisting of a vacuum deep drawing mold part 1 and a fitting sealing mold part 2.

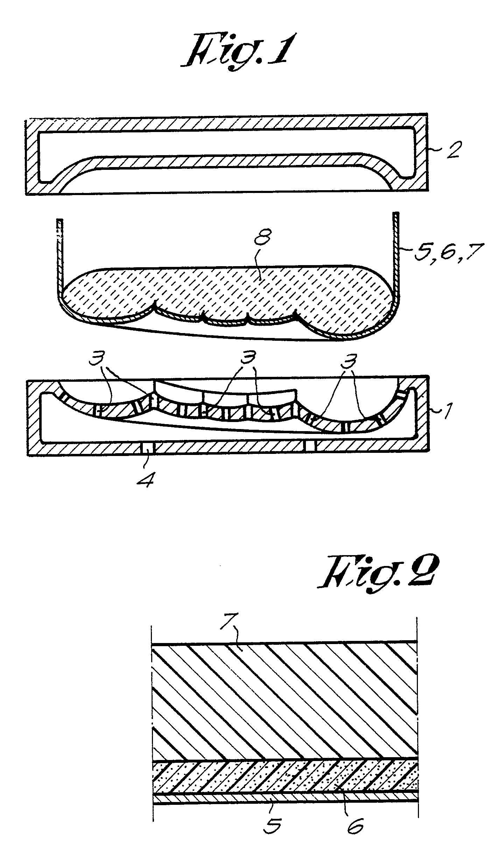

The deep drawing mold part 1 is hollow and is provided with a number of openings 3 in its bottom. Via openings 4 in its outer wall the hollow of the mold part 1 can be connected to a vacuum pump or a source of steam by means of tubes not represented in figure 1 for the sake of simplicity.

With the open position of the mold, according to the invention a covering 5 of textile is installed and positioned over the deep drawing mold part 1.

With the use of a textile that at room temperature is little or non elastic but can be relaxed through heating and thus because of this can achieve a greater transformability, superheated steam at a temperature between 125 and 400°C is blown through the aforementioned openings 4 and 3 and the hollow of the mold part 1 between the covering 5 and the mold part 1, preferably for 5 to 20 s, and the covering 5 of the textile is relaxed because of this.

In most of these cases the textile will be manufactured on the basis of synthetic fibers.

The covering of textile can be both a knit as well as a fabric.

The knit can be both a round knit as well as a chainknit. A suitable knit is for example a Double Rachel knit.

The fabrics can be both smooth fabrics whether or not consisting of elastic fibers such as fiber known on the market under the brand name Lycra, as well as cut piles or otherwise, such as velvet.

The covering 5 of textile can be covered with a thin layer 6 of a supple foam plastic on the side away from the mold part 1.

This layer usually has a thickness of between 2 and 3 mm.

A suitable foam plastic is polyurethane soft foam.

After relaxing the covering 5 of textile the supply of superheated steam is stopped after which an airtight meltable foil 7 is immediately brought onto the covering 5 of textile, on the side away from the mold part 1.

Via the openings 4 and 3 and the hollow of the mold part 1 a vacuum is now created between the foil 7 and the bottom of the mold part 1 through which thus the foil 7, and the covering of textile 5 with the plastic layer 6 are sucked against the bottom of the mold part 1.

Subsequently the liquid components for forming the nucleus 8 of cold form foam plastic are applied to the foil 7.

As liquid components the usual cold form foam formulations can be used on the basis of TDI and MDI as isocyanate and poly alcohols for HR cold form foam known to the professional.

The mold is closed and the mold part 2 is thus pressed against the mold part 1, after which the nucleus of the foam plastic 8 is formed and hardened.

After hardening superheated steam with a temperature between 125 and 400°C is again blown through the openings 4 and 3 and the hollow of the mold part 1. This superheated steam goes through the covering 5 of textile and the layer of foam plastic 6 and melts the foil 7. Thereafter the mold is opened to remove the covered cushion from the mold.

Through the removal of the airtight foil 7 the cushion will be able to breath, which improves the sitting comfort. The melted foil also ensures the gluing of the covering 5 of textile with possibly the layer of foam plastic 6 to the nucleus 8.

Of course the material of the airtight meltable foil 7 must be so chosen that this foil can melt before the covering of textile 5 and possibly the layer of foam plastic 6 are damaged by heat.

As airtight foils especially plastic foils are eligible such as among others polyethylene foils, preferably with a thickness of 10 to 50 μm, polyamide foils, preferably with a thickness of 10 to

50 μm, polyester foils, preferably with a thickness of 10 to 50 μm and polyurethane foils, preferably with a thickness of 10 to 50 μm.

In figure 1 the mold 1, 2 is represented in open position, after the formation of the nucleus 8 and the melting away of the foil 7.

After the removal of the formed cushion from the mold part 1 the edges of the covering 5 of textile which were between or outside the mold parts 1 and 2 during the formation and which stick out around the nucleus 8 are cut off or attached against the nucleus 8. If the covering was already previously provided with a side finish for example in imitation leather or textile which form the edges in question then these can be used as attachment means.

The above described procedure is rather simple. In addition to the improved sitting comfort an increased freedom of design of the shape is also achieved, also when use is made of coverings in textile which under normal conditions are not easily transformable.

Through the relaxation by heating these can then still be brought into the desired shape without a pre-manufacture with all disadvantages thereof being necessary.

The described procedure is especially suitable for manufacturing seat cushions or complete seats for cars but can also be applied for manufacturing others armchairs such as desk armchairs, or desk chairs and similar.

The invention is in no way restricted to the embodiment described above and within the scope of the patent application many changes can be applied to the described embodiment, among others regarding the choice of the various materials.

In particular the relaxation by heating of the covering of textile is not always necessary. This covering can in itself be sufficiently transformable.

In case a relaxation does not have to be performed, the covering of textile and the airtight foil need not necessarily be applied separately.

The covering of textile and the airtight foil can be applied together and even in the form of a pre-manufactured complex, for example a triple layer complex consisting of a layer of textile, a layer of supple foam plastic and the airtight foil.

The melting of the airtight foil need not necessarily occur prior to the opening of the mold. It can also be performed after the opening of the mold and even after the removal of the cushion from the mold, for example in an separate second mold.

The thermal relaxation of the covering need not necessarily occur in the same mold in which the nucleus of foam plastic is formed. This can occur in a separate mold.

## Claims

1. Procedure for manufacturing an armchair cushion with an in situ foamed nucleus (8) of foam plastic and a covering (5, 6, 7), according to which procedure a covering (5) of textile and an airtight meltable foil (7) is brought over a vacuum drawing mold part (1) of a mold (1, 2) with the covering (5) of textile on the side of the mold part (1), the covering (5) and the foil (7), are sucked against the bottom of the mold part (1), at least through the creation of a vacuum between this mold part (1) and the airtight foil (7), in the mold (1, 2) the liquid components are applied for molding the nucleus (8) of the foam plastic and the cushion is removed from the mold (1, 2) after the hardening of the foam plastic, characterized in that, after hardening of the foam plastic, the airtight meltable foil (7) is at least partly melted by blowing hot gaseous fluid at sufficiently high temperature through the covering (5) of textile.

2. Procedure according to claim 1, characterized in that the airtight meltable foil is at least partly melted by blowing steam through the covering of textile.

3. procedure according to claim 2, characterized in that the airtight meltable foil is at least partly melted by superheated steam at a temperature between 125 and 400° C.

4. Procedure according to one of the claims 1 through 3, characterized in that the airtight meltable foil (7) is at least partly melted prior to the removal of the cushion from the mold (1, 2).

5. Procedure according to one of the claims 1 through 4, characterized in that the gaseous fluid for melting the airtight foil is supplied through the openings (3 and 4) along which the vacuum is also drawn.

6. Procedure according to one of the claims 1 through 5, characterized in that a non or little elastic at room temperature but relaxable by heating textile is utilized and, before sucking in the covering (5) against the bottom of the mold part (1), the covering (5) of textile is relaxed with assistance of hot gaseous fluid.

7. Procedure according to claim 6, characterized in that the covering (5) of textile is relaxed before the airtight foil (7) is installed thereon.

8. Procedure according to one of the claims 6 and 7, characterized in that the covering (5) of textile is relaxed by means of steam.

9. Procedure according to claim 7, characterized in that the covering (5) of textile is relaxed by means of superheated steam.

10. Procedure according to one of the claims 1 through 9, characterized in that the covering (5) of textile is covered with a layer of supple foam plastic on the side directed toward the nucleus (8).

11. Procedure according to one of the claims 1 through 9, characterized in that the airtight foil is manufactured from one of the following materials: polyethylene, polyamide, polyester and polyurethane.

12. Armchair cushion manufactured according to the procedure according to one of the preceding claims.

*Fig.1*

*Fig.2*

European Patent Office

EUROPEAN SEARCH REPORT

Application Number

EP 90 87 0033

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-B-3 009 885 (METZELER) <br> * Figures; columns 3,4 * | 1,12 | B 29 C 67/22 <br> B 29 C 51/14 // <br> B 29 L 31/58 |
| A | US-A-4 718 153 (D.H. ARMITAGE) <br> * Figures 1-11; claim 1 * | 1 | |
| A | EP-A-0 227 202 (LEAR SIEGLER) <br> * Figures 1-8; claims * & US-A-4 692 199 (Cat. D) | 1 | |
| A | US-A-3 932 252 (T.W. WOODS) <br> * Figures 1-3; column 2, lines 49-58 * | 1 | |
| A | US-A-4 758 294 (H. STORCH) <br> * Figures 1-4; claims * | 1 | |

TECHNICAL FIELDS
SEARCHED (Int. Cl.5)

B 29 C

The present search report has been drawn up for all claims

| Place of search | Date of completion of the search | Examiner |
|---|---|---|
| THE HAGUE | 30-05-1990 | KUSARDY R. |

EPO FORM 1503 03.82 (P0401)